# EUROPEAN PATENT APPLICATION

(11) **EP 2 772 846 A1**
(43) Date of publication of application: **03.09.2014**
(21) Application number: 13196814.1
(22) Date of filing: 12.12.2013
(51) Int. Cl.: G06F 3/12

(54) **Information processing apparatus, information managing method and program**

(30) Priority: 27.02.2013 JP 2013037569
(71) Applicant: Ricoh Company, Ltd., Tokyo 143-8555 (JP)
(72) Inventor: Akiyama, Chiaki, Tokyo, 143-8555 (JP)
(74) Representative: Schwabe - Sandmair - Marx

(57) **Abstract**

An information processing apparatus includes a first output data generation unit that generates first output data, which is independent of a type of an output device; a second output data generation unit that generates second output data, which depends on the type of the output device, from the first output data, and makes the output device perform output process for the second output data; an output unit that, after being notified by the first output data generation unit that the first output data is generated, transmits the first output data to the second output generation unit; an information generation unit that generates information on a status of outputting by the output device based on the first output data; and an information transmission unit that transmits the information on the status of outputting by the output device to a collection device.

## Description

### BACKGROUND OF THE INVENTION

### 1. Field of the Invention

The disclosures herein generally relate to an information processing apparatus, an information managing method and a program.

### 2. Description of the Related Art

Recently, a job accounting system, which counts a number of printed sheets for each user outputted from a printer connected to a network, and performs an accounting process, or the like, based on a result of the counting, has been commercialized.

Japanese Published Patent Application No. 2006-065889 discloses a job accounting system, which executes a job accounting application including an acquisition unit that acquires print information used for job accounting from a printer driver; and a control unit that controls a notification process for notifying a server device of the print information used for the job accounting.

However, in the job accounting system disclosed in Japanese Published Patent Application No. 2006-065889, the information required for the accounting process may be counted for each user by using a function installed in the image forming apparatus (printer) or a function installed in the printer driver of the image forming apparatus. Accordingly, there has been a problem that counting information required for the accounting process may depend on a type of the image forming apparatus.

The problem that counting information required for accounting process depends on a type of apparatus is a problem common to various output devices, which count information required for accounting, as in the case of the image forming apparatus.

### SUMMARY OF THE INVENTION

It is a general object of at least one embodiment of the present invention to provide an information processing apparatus, an information managing method and a program that substantially obviate one or more problems caused by the limitations and disadvantages of the related art.

In one embodiment of the present invention, an information processing apparatus includes a first output data generation unit that generates first output data which is independent of a type of an output device; a second output data generation unit that generates second output data which depends on the type of the output device from the first output data, and makes the output device perform an output process for the second output data; an output unit that, after being notified by the first output data generation unit that the first output data is generated, transmits the first output data to the second output generation unit; an information generation unit that generates information on a status of outputting by the output device based on the first output data; and an information transmission unit that transmits the information on the status of outputting by the output device to a collection device, which collects the information on the status of outputting.

In another embodiment of the present invention, an information managing method includes notifying an output unit that a first output data, which is independent of a type of an output device, is generated by a first output data generation unit; after the output unit is notified that the first output data is generated, transmitting the first output data to a second output data generation unit, which generates a second output data, which depends on the type of the output device, from the first output data and makes the output device perform an output process for the second output data; generating information on a status of outputting by the output device based on the first output data; and transmitting the information on the status of outputting by the output device to a collection device, which collects the information on the status of outputting.

In yet another embodiment of the present invention, a non-transitory computer-readable storage medium stores a program for causing a computer to perform a process of managing information. The process includes a step of notifying an output unit that a first output data, which is independent of a type of an output device, is generated by a first output data generation unit; a step of transmitting, after the output unit is notified that the first output data is generated, the first output data to a second output data generation unit, which generates a second output data, which depends on the type of the output device, from the first output data and makes the output device perform an output process for the second output data; a process of generating information on a status of outputting by the output device based on the first output data; and a process of transmitting the information on the status of outputting by the output device to a collection device, which collects the information on the status of outputting.

According to the present exemplary embodiment, information on output status from output devices can be counted independently of a type of the output device.

### BRIEF DESCRIPTION OF THE DRAWINGS

Other objects and further features of embodiments will be apparent from the following detailed description when read in conjunction with the accompanying drawings, in which:
Fig. 1 is a configuration diagram illustrating an example of an information processing system according to a present exemplary embodiment;
Fig. 2 is a hardware configuration diagram illustrating an example of a computer system according to the present exemplary embodiment;
Fig. 3 is a process block diagram illustrating an example of a client terminal according to the present exemplary embodiment;
Fig. 4 is a detailed process block diagram illustrating the example of the client terminal according to the present exemplary embodiment;
Fig. 5 is a process block diagram illustrating an example of an accounting server according to the present exemplary embodiment;
Fig. 6 is a flowchart illustrating an example of a procedure of printing according to the present exemplary embodiment;
Fig. 7 is a flowchart illustrating an example of a procedure of transmitting accounting information, according to the present exemplary embodiment;
Fig. 8 is a configuration diagram illustrating an example of setting information managed by a system setting unit according to the present exemplary embodiment; and
Fig. 9 is a configuration diagram illustrating an example of the accounting information according to the exemplary embodiment.

### DESCRIPTION OF THE PREFERRED EMBODIMENTS

In the following, embodiments of the present invention will be described with reference to the accompanying drawings.

### [First exemplary embodiment]

### <System configuration>

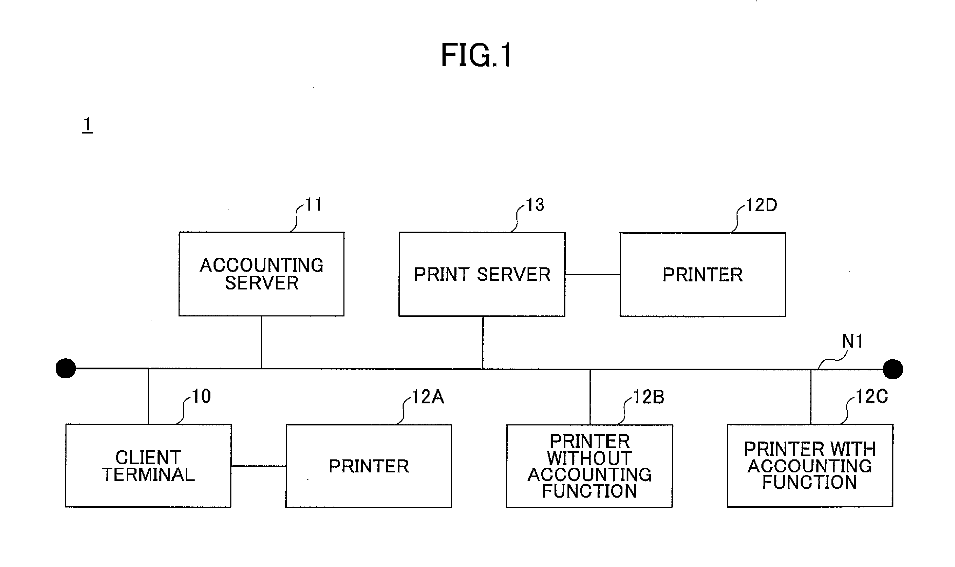

Fig. 1 shows a diagram illustrating an example of a configuration of an information processing system according to the present exemplary embodiment. The information processing system 1 includes a client terminal 10, an accounting server 11, printers 12A to 12D, and a print server 13. The client terminal 10, the accounting server 11, the printers 12A to 12D and the print server 13 are connected to a network N1, so as to perform data communications with each other.

The client terminal 10 is an information processing apparatus, such as a personal computer (PC), used by a user. The client terminal 10 may be any apparatus, as long as the user can use it for the data communications, such as a PC, a smartphone or a mobile phone, in which a general-purpose operating system (OS) or the like is installed. The client terminal 10 includes a wired communication unit or a wireless communication unit. The client terminal 10 further includes an input device, such as a keyboard or a mouse, and an output device, such as a display. On the OS, at least one application program operates.

The client terminal 10 is directly connected with the printer 12A, wiredly or wirelessly, as shown in Fig. 1. The client terminal 10 is indirectly connected with the printers 12B and 12C, via the network N1. Moreover, the client terminal 10 is indirectly connected with the printer 12D via the network N1 and the print server 13. In the present exemplary embodiment, the printer 12B does not have an accounting function, whereas the printer 12C has the accounting function. The printer 12C can transmit accounting information, which will be explained later, by using the accounting function of the printer 12C, to the accounting server 11.

In the following, each of the printers 12A to 12D may be called "printer 12", if the printers 12A to 12D are not distinguished from one another. The printer 12 may be a complex machine equipped with at least one of functions of copying, faxing, scanning, and the like. The printer 12 is an example of an image forming apparatus. The image forming apparatus is an example of an output device. The client terminal 10 can make the printer 12, connected to the client terminal 10, print print data by an application program, such as document preparation software, via a printer driver.

The print server 13, in which a general-purpose OS for server or the like is installed, is an information processing apparatus, by which the client terminal 10 can use the printer 12D. The client terminal 10 can use a virtual (logical) printer driver installed on the print server 13, via the network N1.

When printing is performed by using the virtual printer driver on the print server 13, the process of transmitting the account information may be performed either at the client terminal 10 or at the print server 13. In the case of performing the printing without using the virtual printer driver on the print server 13, the process of transmitting the account information may be performed at the client terminal 10.

The accounting server 11 counts information on a print status at the printer 12. For example, the accounting server 11 counts a number of printed sheets of paper for each user, and performs accounting process or the like based on the counted number.

Moreover, the accounting server further counts a status of utilizing a setting for printing for reducing TCO (Total Cost of Ownership), or a setting related to an environment, such as double-sided printing and color printing for each user. The accounting server 11 provides reporting information based on the counted data for the status of utilizing the setting for printing. Since the accounting process is performed for each user, further operations, such that a user authenticated by the accounting server 11 can use the printer 12, may be possible. The accounting server 11 has an authentication function, which will be explained later.

The network N1 may be any network, as long as information communication is possible among the client terminal 10, the accounting server 11, the printers 12B, 12C and the print server 13. The network N1 may be configured with a router or a firewall. Fig. 1 shows a configuration of the information processing system, as an example, including one client terminal 10, one accounting server 11, one print server 13, and four printers 12. The information processing system according to the present exemplary embodiment may be configured otherwise.

### <Hardware configuration>

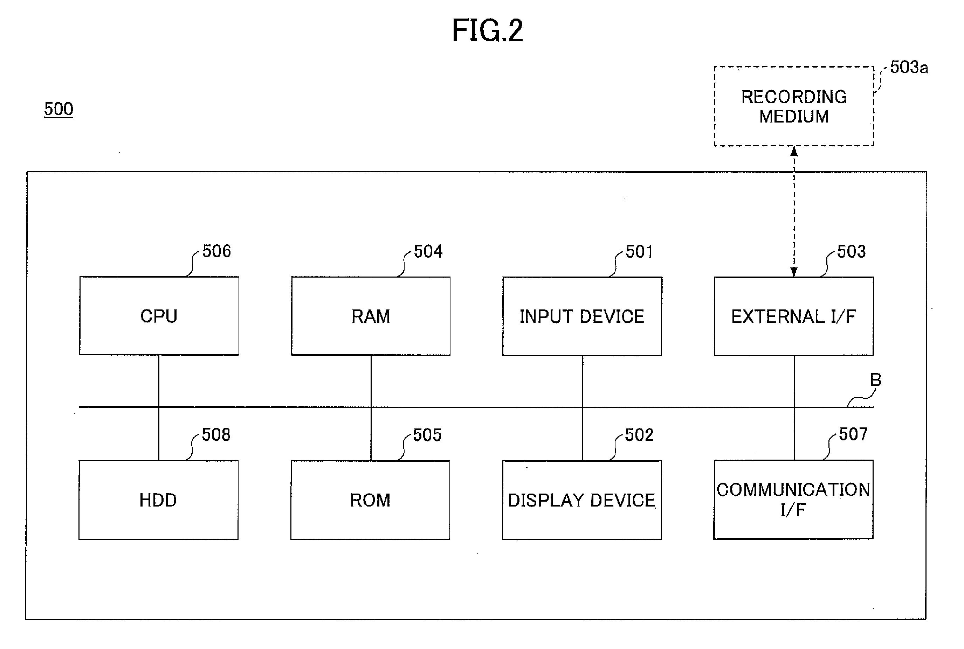

Fig. 2 shows an example of a hardware configuration of a computer system according to the present exemplary embodiment. The client terminal 10, the accounting server 11 and the print server 13, according to the present exemplary embodiment, are realized by the hardware configuration shown in Fig. 2.

The computer system 500, as shown in Fig. 2, includes an input device 501, a display device 502, an external I/F (interface) device 503, a RAM (random access memory) 504, a ROM (read only memory) 505, a CPU (central processing unit) 506, a communication I/F 507, an HDD (hard disk drive) 508, and the like. The above devices are connected with each other via a bus B.

The input device 501 includes a keyboard, a mouse, a touch panel, or the like, and is used for receiving an input operation from a user and converts the input operation into an input signal. The display device 502 includes a display apparatus or the like, and displays a result of process in the computer system 500 on it.

The communication I/F 507 is an interface that connects the computer system 500 to the network N1. Accordingly, the computer system 500 can perform data communication via the communication I/F 507.

The HDD is a non-volatile storage device that stores a program or data. The stored program or data includes, for example, an OS (operating system), which is basic software controlling the entire operations of the computer system 500, an application program, which provides various functions on the OS, or the like. The HDD manages the stored program or data by using a predetermined file system and/or a DB (database).

The external I/F 503 is an interface to an external device. The external device is, for example, a read/write device for a recording medium 503a. Accordingly, the computer system 500 can read from and/or write into the recording medium 503a via the external I/F 503. The recording medium 503a is, for example, a flexible disk, a CD (compact disk), a DVD (digital versatile disk), an SD memory card, a USB memory (universal serial bus memory), or the like.

The ROM 505 is a non-volatile semiconductor memory (storage device), which can hold a program or data even if power is turned off. In the ROM 505, a program or data for setting the OS and the network is stored. The RAM 504 is a volatile semiconductor memory (storage device), which temporarily stores a program or data.

The CPU 506 is a process unit that realizes an operation of controlling the entirety of the computer system 500 and a function of the whole computer system 500, by reading out the program or data from the storage device, such as the ROM 505 or the HDD 508, onto the RAM 504, and by executing the process. According to the hardware configuration of the computer system 500, the client terminal 10, the accounting server 11 and the print server 13 realize various operations of process, which will be explained later.

### <Software configuration>

In the information processing system according to the present exemplary embodiment, an example will be explained where the process of transmitting the accounting information is performed at the client terminal 10. An explanation for the case where the process of transmitting the accounting information is performed at the print server 13 is the same as the above.

### «Client terminal 10»

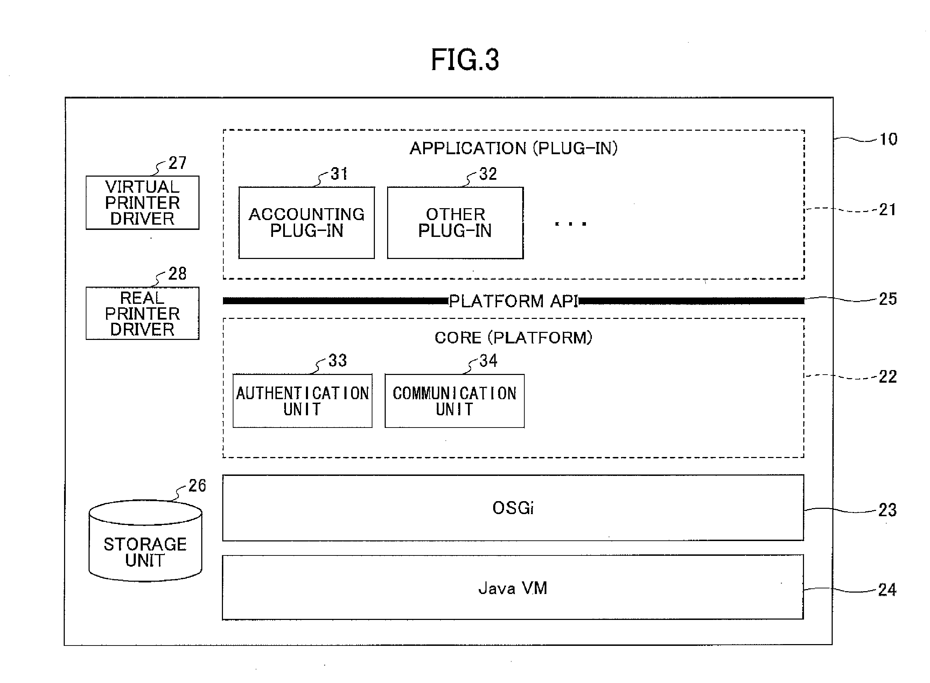

The client terminal 10 according to the present exemplary embodiment is realized, for example, by a process block shown in Fig. 3. Fig. 3 is a process block diagram illustrating an example of the client terminal 10.

The client terminal 10 realizes, by executing a program, functions of an application (plug-in) 21, a platform (Core) 22, an OSGi (Open Service Gateway Initiative) platform 23, a Java VM 24, a platform API (Application Programming Interface) 25, a storage unit 26, a virtual printer driver 27, and a real printer driver 28.

The application 21 includes an accounting plug-in 31, and another plug-in 32. The accounting plug-in, as explained later, performs process for transmitting the accounting information to the accounting server 11. The other plug-in 32 performs some sort of process. The other plug-in 32 is not indispensable.

The platform API 25 is an interface, by which the accounting plug-in 31 and the other plug-in 32 use the platform 22. The platform API 25 is also a predefined interface, by which the platform 22 receives a request from the application 21, and includes, for example, a function, a class or the like.

The platform 22 includes an authentication unit 33, a communication unit 34, or the like. The authentication unit 33 performs process related to an authentication based on a request from the application 21. The communication unit 34 executes a process of communicating with the accounting server 11, or the like. The communication unit 34 transmits, for example, the accounting information to the accounting server 11.

The OSGi 23 is an infrastructure system (OSGi framework), that manages dynamic addition of a plug-in (Java module) and execution of the plug-in. The Java VM (virtual machine) 24 is an execution environment for the plug-in. Meanwhile, the OSGi 23 and the Java VM 24 are existing technologies, and the explanation is omitted.

The storage unit 26 stores intermediate data (in a form of a file), which will be explained later. The virtual printer driver 27 generates the intermediate data from application data prepared by an arbitrary application program, such as document preparation software. The intermediate data are print data independent of a type of the printer 12. Data in the XPS (XMZ paper specification) format are an example of the intermediate data. The real printer driver 28 generates RAW data from the intermediate data. The RAW data is print data that depends on the type of the printer 12. Data in PDL (page description language) format is an example of the RAW data. The type of printers is specified by a specification including a description form for print data. From the intermediate data, print data in a description form, corresponding to a type of a printer, is generated.

The client terminal 10, as shown in Fig. 3, consolidates processes, by consolidating functions commonly used by the plural applications (plug-ins) 21 in the platform 22. Meanwhile, the form of classification in the process block diagram, shown in Fig. 3, is an example, and classifying in the hierarchies, shown in Fig. 3, is not indispensable.

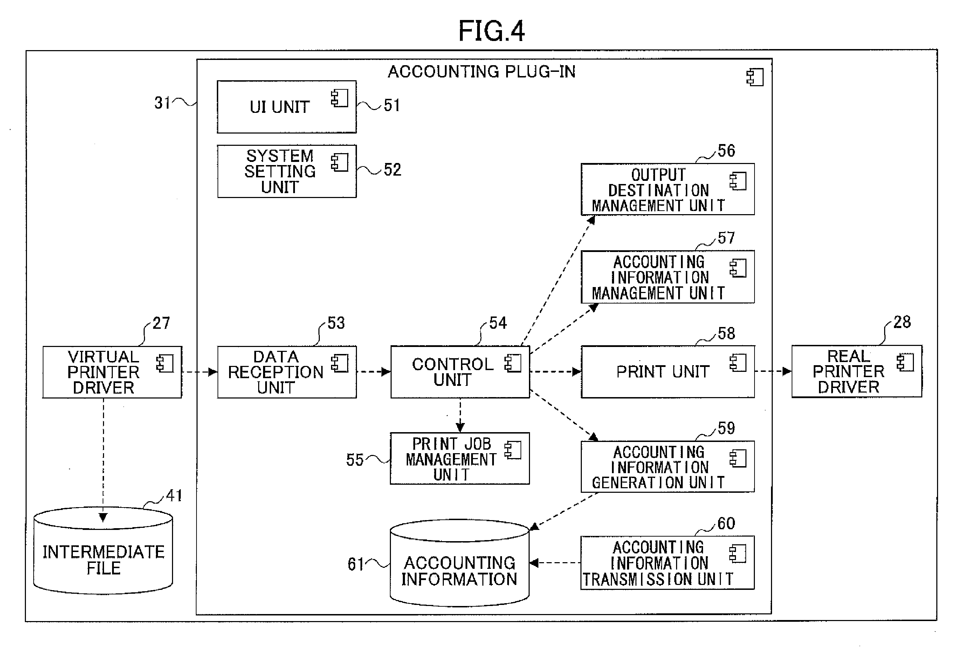

Fig. 4 is a detailed process block diagram of the client terminal. Especially, Fig. 4 shows an essential configuration of the process block diagram of the client terminal 10, required for an explanation in the exemplary embodiment. The configuration, shown in Fig. 4, includes the virtual printer driver 27, the real printer driver 28, and the accounting plug-in 31.

In the client terminal 10 according to the present exemplary embodiment, the OS operates. In general, when the application program, such as document preparation software operating on the OS, performs a print process, a graphic engine performs a drawing process to generate application data, which is transferred to the printer driver. The printer driver converts the application data into codes (RAW data) in a processable format in the printer 12, such as the PDL format. A spooler accumulates the converted codes, and transfers the RAW data to the printer 12, to execute the print process.

The graphic engine is called as GDI (graphic device interface) in Windows (trademark registered) as an example of the OS. The GDI and the spooler are provided by the OS.

Recently, intermediate data, for example in the XPS format, are also used for a print spool file. When the application program, such as the document preparation software, performs a print process by using the printer driver compatible with the XPS, the data in the XPS format, for example, are accumulated. The data in the XPS format (XPS file) may include a print ticket file having print setting information.

In the client terminal 10, shown in Fig. 4, the virtual printer driver 27 converts drawing data from the application program into the intermediate data in a format of such as EMF (enhanced metafile format), bitmap, or the XPS, and accumulates the converted intermediate data into the storage unit 26, as the intermediate file 41. On accumulating the intermediate data, the client terminal 10 adds print setting information to the intermediate file 41.

In the following, an example, in which an XPS file is used as the intermediate file, and a print ticket file included in the XPS file is used for the print setting information, will be explained.

The virtual printer driver 27 generates the XPS file, and gives a notice to the accounting plug-in 31 at the timing of status of, for example, starting job, starting generating page, finishing generating page, and finishing job. For a method of sending/receiving a message, the method of communication between processes may be employed, for example. The notification message includes information on the status, a file path of the XPS, and the job. The information on the job includes a name of a document, a user name, or the like.

The accounting plug-in 31 includes a UI (user interface) unit 51, a system setting unit 52, a data reception unit 53, a control unit 54, a print job management unit 55, an output destination management unit 56, an accounting information management unit 57, a print unit 58, an accounting information generation unit 59, and an accounting information transmission unit 60.

The UI unit 51 provides a user interface for performing the system setting. The system setting unit 52 manages a network address of the accounting server 11 preconfigured by an administrator or the like, or setting information on the real printer driver 28 which performs the printing or the like. The data reception unit 53 receives the message that the virtual printer driver 27 performs the printing, and gives a notice to the control unit 54.

The control unit 54 controls the print process. The print job management unit 55 manages the print job and the job information. The output destination management unit 56 manages a destination of the output from the real printer driver 28. The accounting information management unit 57 manages a user authentication, a restriction of use, and the like, processed by the accounting server 11.

The print unit 58 makes the real printer driver 28 print an XPS file. The accounting information generation unit 59 analyzes the XPS file and the print ticket file included in the XPS file, and generates the accounting information. The accounting information is stored in the storage unit 26 in a form of a file 61. The accounting information includes, for example, a number of sheets to be printed, setting for double-sided printing, setting for color printing, a size of print paper, or the like.

The number of sheets to be printed is determined by a number of pages and the print setting information. The number of pages can be obtained by counting the number of page files included in the XPS file. The print setting information includes a number of copies, setting for aggregate printing, setting for double-sided printing, a size of page, or the like.

The accounting information generation unit 59 determines the number of sheets to be printed, for example, by multiplying the number of pages by 5 when the number of copies is 5, or by dividing the number of sheets to be printed by 2 when two pages are aggregated into one page. The setting for double-sided printing, the setting for color printing, and the size of print paper can be obtained from the print ticket file.

The accounting information transmission unit 60 monitors that the file 61 including the accounting information is stored in the storage unit 26, and when the file 61 including the accounting information is stored, transmits the accounting information to the accounting server 11. Meanwhile, the process block diagram, shown in Fig. 4, according to the present exemplary embodiment is an example. The virtual printer driver 27 may include at least a part of the process block of the accounting plug-in 31, for example. Moreover, the accounting plug-in 31 may be realized by plural of the plug-ins 21. Furthermore, the platform 22 may include at least a part of the process block of the accounting plug-in 31.

### «Accounting server 11»

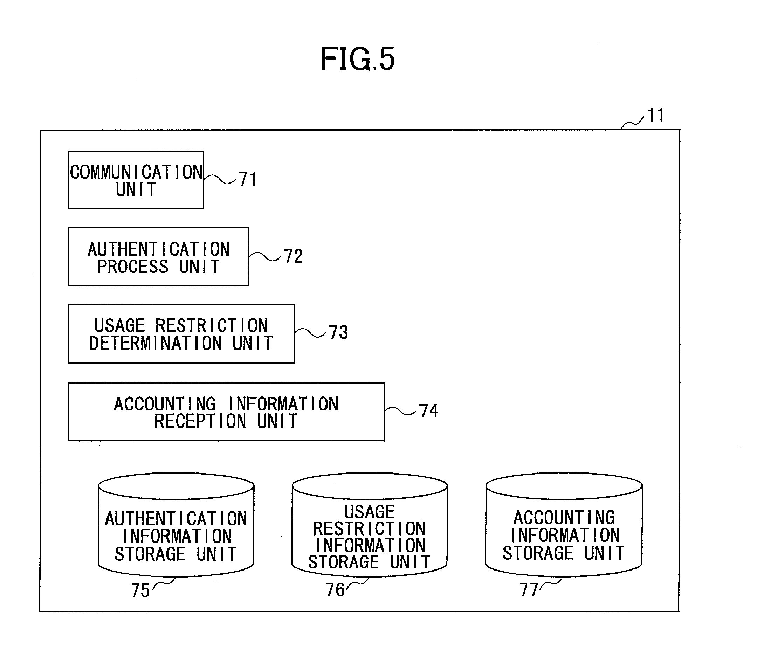

Fig. 5 shows an example of a process block diagram of the accounting server 11 according to the present exemplary embodiment. The accounting server 11 is realized by the process block diagram shown in Fig. 5.

The accounting server 11 realizes a communication unit 71, an authentication process unit 72, a usage restriction determination unit 73, an accounting information reception unit 74, an authentication information storage unit 75, a usage restriction information storage unit 76, and an accounting information storage unit 77, by executing a program.

The communication unit 71 executes communications with the client terminal 10, or the like. The communication unit 71 receives, for example, accounting information from the client terminal 10. The authentication process unit 72, in response to an inquiry whether a printing by a user from the client terminal 10 is permitted or not, replies that the printing is permitted or not permitted. The authentication process unit 72 determines whether the printing by the user is permitted or not, using the authentication information stored in the authentication information storage unit 75.

The usage restriction determination unit 73, in response to an inquiry whether a usage by the user from the client terminal 10 is restricted or not, replies that the usage by the user is possible or impossible. The usage restriction determination unit 73 determines whether the usage by the user is possible or not, using the user usage restriction information stored in the usage restriction information storage unit 76.

The accounting information reception unit 74 receives the accounting information from the client terminal 10. The accounting information reception unit 74 stores the received accounting information in the accounting information storage unit 77.

### <Details of process>

Details of an example of process of the accounting plug-in 31 according to the present exemplary embodiment will be explained in the following.

### <Print process>

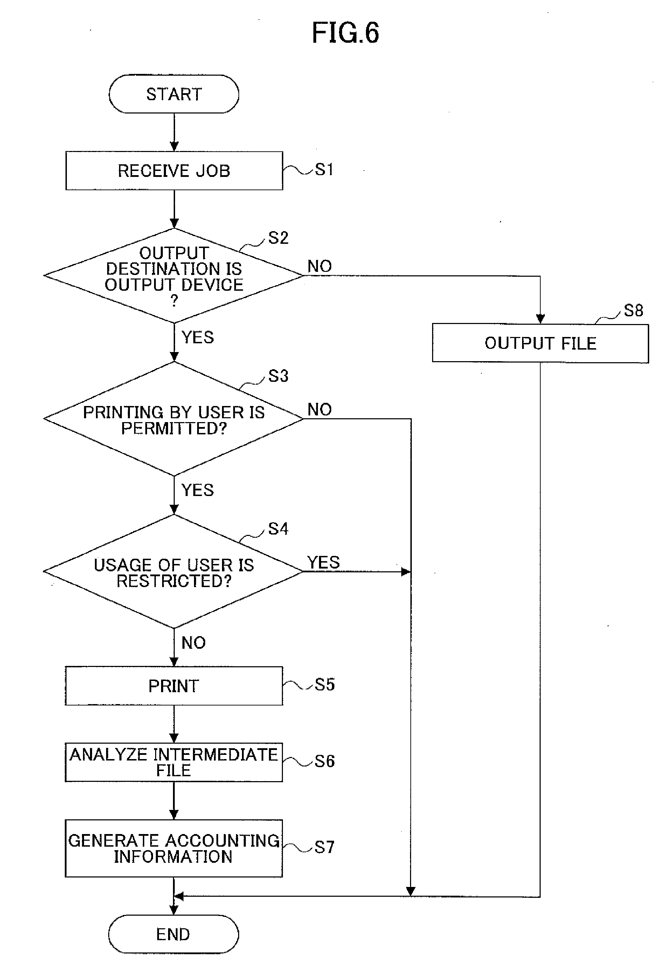

Fig. 6 is a flowchart illustrating an example of a procedure of the print process according to the present exemplary embodiment. The data reception unit 53 of the accounting plug-in 31 waits for the message, which has been explained as above, from the virtual printer driver 27.

The data reception unit 53 receives the above-described message, or the like, that the print process has been performed at the virtual printer driver 21, and gives a message to the control unit 54 (step S1). The control unit 54 requires the output destination management unit 56 to determine an output destination of the real printer driver 28 (step S2). The output destination management unit 56 determines the output destination of the real printer driver 28. The output destination management unit 56 determines the output destination referring to a port monitor or a port name connected to the real printer driver 28.

For example, when the port monitor is for generating PDF, the output destination management unit 56 determines that the destination is for outputting a file. Moreover, when the port name has a form of a directory name, the output destination management unit 56 determines that the destination is for outputting a file. The output destination management unit 56 may use setting information indicating whether the output destination is an output device, and determine that the output destination is the output device.

When the output destination is the output device, the control unit 54 requires the accounting information management unit 57 to perform the user authentication and to check usage restriction in the accounting server 11. The accounting information management unit 57 acquires a user name from job information. The accounting information management unit 57 transfers the acquired user name to the authentication unit 33, and inquires whether a printing by a user specified by the user name is permitted or not (step S3). The authentication unit 33 inquires of the accounting server 11, whether the printing by the user specified by the user name is permitted or not. When the accounting server replies that the printing is permitted or not, the authentication unit 33 transmits content to the accounting information management unit 57.

When the printing by the user is permitted, the accounting information management unit 57 inquires of the accounting server 11 whether a usage by the user specified by the user name is restricted or not (step S4). The accounting server 11 determines whether the usage by the user specified by the user name is restricted or not. For example, the accounting server 11 may determine that the usage by the user is restricted if the number of sheets to be printed is larger than a predetermined upper limit. The accounting server 11 replies that the printing is permitted if the usage by the user is not restricted, and replies that the printing is not permitted if the usage by the user is restricted.

If the usage by the user is not restricted, the control unit 54 requires the print unit 58 to print. The print unit 58 acquires a name of the real printer from the setting information managed by the system setting unit 52 (step S5). The print unit 58 makes a real printer driver 28, specified by the name of the real printer, print an XPS file. The accounting information generation unit 59, according to the request from the control unit 54, analyzes the XPS file and a print ticket file included in the XPS file (step S6).

Next, the accounting information generation unit 59 generates accounting information based on a result of analysis for the XPS file and the print ticket file included in the XPS file (step S7). The accounting information generation unit 59 stores the generated accounting information into the storage unit 26.

When the output destination is not an output device (step S2 NO), the control unit 54 requires the print unit 58 to print. The print unit 58 acquires the name of the real printer from the setting information managed by the system setting unit 52. The print unit 58 makes the real printer driver 28, specified by the name of the real printer, output the XPS file (step S8). Since the output destination is not an output device, the control unit 54 does not require the accounting information generation unit 59 to generate accounting information.

Moreover, if the printing by the user is not permitted (step S3 NO) or if the usage of the user is restricted (step S4 YES), the control unit 54 finishes the print process illustrated in the flowchart shown in Fig. 6, to interrupt the print process.

The client terminal shown in Fig. 4 includes the virtual printer driver 27 and the real printer driver 28. A user of the client terminal according to the present exemplary embodiment preferably selects and uses the virtual printer driver 27. The user may select and use the real printer driver 28. In the case of selecting the real printer driver 28, the client terminal 10 can perform printing without generating accounting information.

Generally, to the real printer driver 28 an access right can be attached. The usage by a user may be restricted by attaching to the real printer driver 28 an access right that a usage by a user is not permitted and an access right of a special user. The accounting plug-in 31, activated as the special user, can use the real printer driver 28.

In the flowchart, shown in Fig. 6, determining whether the output destination is an output device, determining whether the printing by the user is permitted, and determining whether the usage by the user is restricted are performed. One or more determinations of the above determinations may be omitted.

### «Accounting information transmitting process»

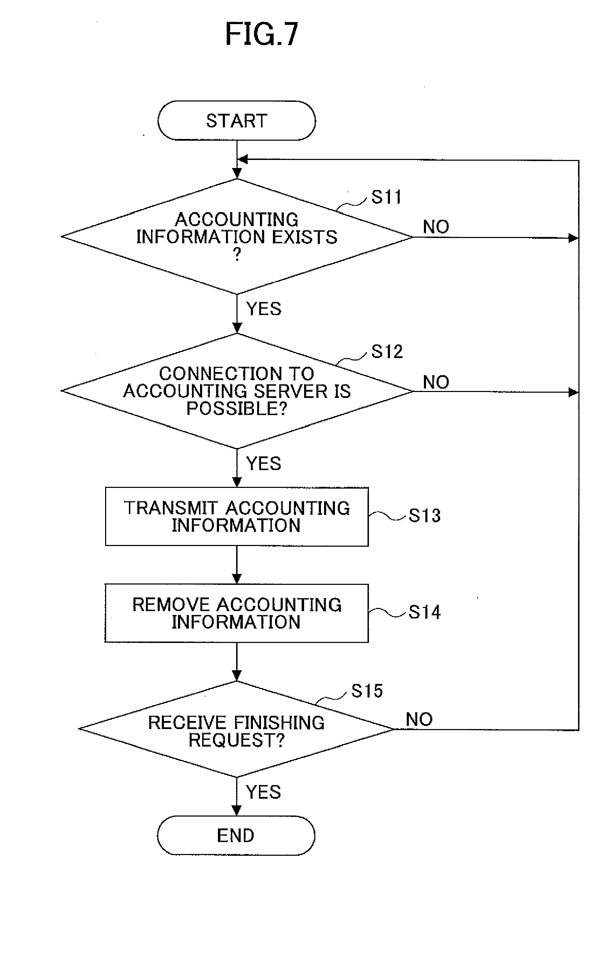

The accounting information, stored in the storage unit 26, is transmitted to the accounting server 11. Fig. 7 is a flowchart illustrating an example of the process of transmitting the accounting information.

The accounting information transmission unit 60 determines whether accounting information exists or not (step S11). The process of determining whether the accounting information exists or not, is, for example, monitoring the storage unit 26, which stores the accounting information. The process at step S11 is repeated until the accounting information transmission unit 60 determines that accounting information exists.

When accounting information exists, the accounting information transmission unit 60 tries to connect to the accounting server 11 (step S12). If connecting to the accounting server 11 is possible, the accounting information transmission unit 60 transmits the accounting information to the accounting server 11 (step S13).

The accounting information transmission unit 60 removes the accounting information transmitted to the accounting server 11 from the storage unit 26 (step S14). The accounting information transmission unit 60 finishes the process of transmitting, shown in Fig. 7, when a finishing request is received (step S15 YES).

Unless the finishing request is received, the process of the accounting information transmission unit 60 goes back to step S11. Moreover, if the accounting information transmission unit cannot connect to the accounting server 11 (step S12 NO), the process goes back to step S11.

In the flowchart, shown in Fig. 7, all the accounting information is transmitted to the accounting server 11. The present exemplary embodiment is not limited to the above operation. The accounting information to be transmitted may be managed by using a table or the like. The accounting information may be checked so as not to transmit the same information redundantly. For example, since the printer 12C, shown in Fig. 1, has the accounting function, the printer 12C may transmit the accounting information by using the accounting function of the printer 12C to the accounting server 11.

The information processing system 1 according to the present exemplary embodiment may have a mechanism to exclude overlapping accounting information in the client terminal 10 or the accounting server 11.

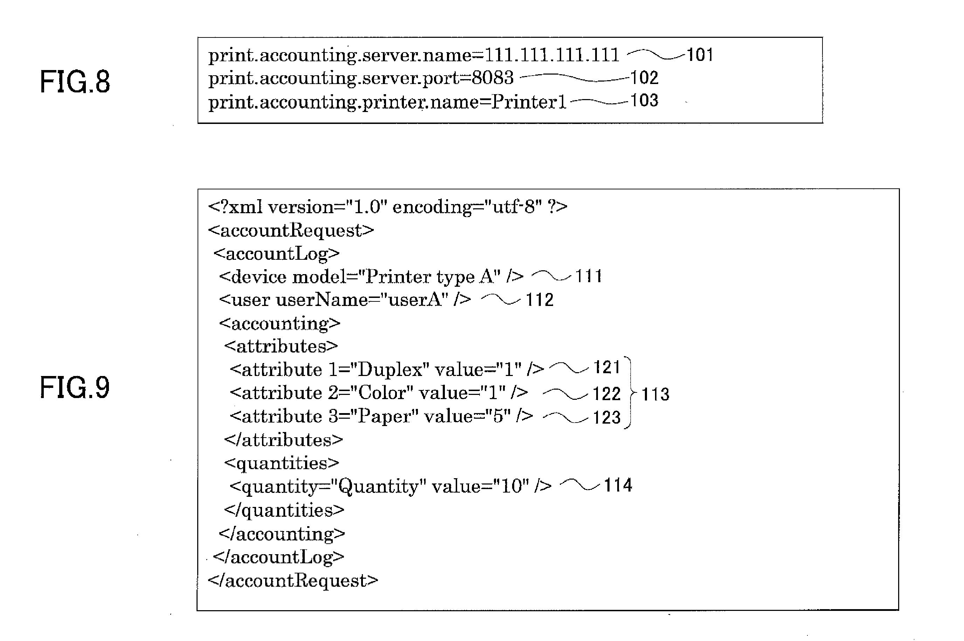

Fig. 8 shows a configuration diagram of an example of the setting information managed by the system setting unit 52 according to the present exemplary embodiment. The setting information includes an IP (internet protocol) address 101 of the accounting server 11, a port number for connecting 102 to the accounting server 11, a name of the real printer 103, or the like. The IP address 101 of the accounting server 11 may be a host name of the accounting server 11. In the case that the information processing system 1 includes plural virtual printer drivers 27, setting information may be set for each of the virtual printer drivers 27.

Fig. 9 shows a configuration diagram of an example of the accounting information according to the present exemplary embodiment. The accounting information, as shown in Fig. 9, according to specification of the accounting server 11, includes a name of the real printer 111, a name of the user who has processed the printing 112, the print setting information 113, and a number of sheets to be printed 114. The print setting information, shown in Fig. 9, includes setting information for both-sides printing 121, setting information for color printing 122, and setting information for a size of paper 123.

The client terminal 10 according to the present exemplary embodiment generates intermediate data by printing at the virtual printer driver 27 by an arbitrary application program, such as document preparation software. The client terminal 10 acquires information on a number of sheets to be printed, print setting information, or the like from the intermediate data, which are required for generating the accounting information. The client terminal 10 generates accounting information, and transmits the information to the accounting server 11. The real printer driver, connected to an output device (outputting apparatus), such as the printer 12, generates print data depending on a type of the output device, i.e. in a data format recognizable by the output device, from the intermediate data. The client terminal 10 transmits the generated print data to the output device.

The information processing system 1 according to the present exemplary embodiment, explained above, transmits to the accounting server 11 accounting information as information on an output status of the output device, the information being independent of a manufacturer or a type of the output device, such as the printer 12.

Furthermore, in the information processing system 1, according to the present exemplary embodiment, since the client terminal 10 can generate the accounting information from the intermediate data, even if an output device is locally connected to the client terminal, such as the printer 12A in Fig. 1, the output device can generate the accounting information. Accordingly, the accounting server 11 can perform the process of accounting or reporting, independently of the manufacturer or the type of the output device.

The information processing system 1 according to the present exemplary embodiment can solve the problem that the output device having an accounting function cannot transmit accounting information when the output device is locally connected. Moreover, the information processing apparatus 1 according to the present exemplary embodiment can also solve the problem that when the real printer driver 28 has an accounting function, the process depends on the manufacturer or the type of the output device.

Further, the present invention is not limited to these embodiments, but various variations and modifications may be made without departing from the scope of the present invention.

The first output data generation unit recited in claims corresponds to the virtual printer driver 27. The output device corresponds to the printer 12. The first output data corresponds to the intermediate data. The second output data corresponds to the RAW data. The second output data generation unit corresponds to the real printer driver 28. The output unit corresponds to the print unit 58.

The information on the output status by the output device, recited in claims, corresponds to the accounting information. The information generation unit corresponds to the accounting information generation unit 59. The collection device correcting information corresponds to the accounting server 11. The information transmission unit corresponds to the accounting information transmission unit 60. A program corresponds to the accounting plug-in 31. The outputting destination management unit corresponds to the outputting destination management unit 56. The outputting permission determination unit and usage restriction determination unit correspond to the accounting information management unit 57.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can comprise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can comprise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The present application is based on and claims the benefit of the priority of Japanese Priority Application No. 2013-037569 filed on February, 27, 2013, with the Japanese Patent Office, the entire contents of which are hereby incorporated by reference.

## Claims

1. An information processing apparatus comprising:
a first output data generation unit that generates first output data, which is independent of a type of an output device;
a second output data generation unit that generates second output data, which depends on the type of the output device, from the first output data, and makes the output device perform an output process for the second output data;
an output unit that, after being notified by the first output data generation unit that the first output data is generated, transmits the first output data to the second output generation unit;
an information generation unit that generates information on a status of outputting by the output device based on the first output data; and
an information transmission unit that transmits the information on the status of outputting by the output device to a collection device, which collects the information on the status of outputting.

2. The information processing apparatus, as claimed in claim 1, further comprising:
an outputting destination management unit that determines whether an output destination of the first output data is the output device or not, wherein
the information generation unit generates the information on the status of outputting by the output device when the output destination of the first output data is the output device, and does not generate the information on the status of outputting by the output device when the output destination of the first output data is an output file.

3. The information processing apparatus, as claimed in claim 2, wherein when the output destination of the first output data is the output file, the output unit transmits the first output data to the second output data generation unit, which outputs the output file based on the first output data.

4. The information processing apparatus, as claimed in claim 1, further comprising:
an output permission determination unit that determines whether an output by a user, who required the output device to output, is permitted or not, wherein
the output unit, after the output by the user is determined to be permitted, transmits the first output data to the second output data generation unit.

5. The information processing apparatus, as claimed in claim 1, further comprising:
a usage restriction determination unit that determines whether an output by a user, who required the output device to output, is restricted or not, wherein
the output unit, after the output by the user is determined not to be restricted, transmits the first output data to the second output data generation unit.

6. An information managing method comprising:
Notifying an output unit that a first output data, which is independent of a type of an output device, is generated by a first output data generation unit;
after the output unit is notified that the first output data is generated, transmitting the first output data to a second output data generation unit, which generates a second output data, which depends on the type of the output device, from the first output data and makes the output device perform an output process for the second output data;
generating information on a status of outputting by the output device based on the first output data; and
transmitting the information on the status of outputting by the output device to a collection device, which collects the information on the status of outputting.

7. The information managing method, as claimed in claim 6, further comprising:
determining whether an output destination of the first output data is the output device or not, wherein
the information on the status of outputting by the output device is generated when the output destination of the first output data is the output device, and the information on the status of outputting by the output device is not generated when the output destination of the first output data is an output file.

8. The information managing method, as claimed in claim 7, wherein when the output destination of the first output data is the output file, the first output data is transmitted to the second output generation unit, which outputs the output file based on the first output data.

9. The information managing method, as claimed in claim 6, further comprising:
determining whether an output by a user, who required the output device to output, is permitted or not, wherein
after the output by the user is determined to be permitted, the first output data is transmitted to the second output data generation unit.

10. The information managing method, as claimed in claim 6, further comprising:
determining whether an output by a user, who required the output device to output, is restricted or not, wherein
after the output by the user is determined not to be restricted, the first output data is transmitted to the second output data generation unit.

11. A non-transitory computer-readable storage medium storing a program for causing a computer to perform a process of managing information, the process comprising:
a step of notifying an output unit that a first output data, which is independent of a type of an output device, is generated by a first output data generation unit;
a step of transmitting, after the output unit is notified that the first output data is generated, the first output data to a second output data generation unit, which generates a second output data, which depends on the type of the output device, from the first output data and makes the output device perform an output process for the second output data;
a step of generating information on a status of outputting by the output device based on the first output data; and
a step of transmitting the information on the status of outputting by the output device to a collection device, which collects the information on the status of outputting.

12. The non-transitory computer-readable storage medium as claimed in claim 11, further comprising:
a step of determining whether an output destination of the first output data is the output device or not, wherein
the information on the status of outputting by the output device is generated when the output destination of the first output data is the output device, and the information on the status of outputting by the output device is not generated when the output destination of the first output data is an output file.

13. The non-transitory computer-readable storage medium as claimed in claim 12, wherein when the output destination of the first output data is the output file, the first output data is transmitted to the second output generation unit, which outputs from the first output data to the output file.

14. The non-transitory computer-readable storage medium as claimed in claim 11, further comprising:
a step of determining whether an output by a user, who required the output device to output, is permitted or not, wherein
after the output by the user is determined to be permitted, the first output data is transmitted to the second output data generation unit.

15. The non-transitory computer-readable storage medium as claimed in claim 11, further comprising:
a step of determining whether an output by a user, who required the output device to output, is restricted or not, wherein
after the output by the user is determined not to be restricted, the first output data is transmitted to the second output data generation unit.
